# EUROPEAN PATENT APPLICATION

(11) **EP 2 073 472 A1**
(43) Date of publication of application: **24.06.2009**
(21) Application number: 08150379.9
(22) Date of filing: 17.01.2008
(51) Int. Cl.: H04L 25/06

(54) **DC restoration circuit allowing sparse data patterns**

(30) Priority: 19.12.2007 EP 07150167
(71) Applicant: Eqcologic NV, 1040 Brussel (BE)
(72) Inventor: Maillard, Xavier, 1673 Beert (BE); Van den Brande, Koen, 2630 Aartselaar (BE); Kuijk, Maarten, 2600 Berchem (BE)
(74) Representative: Hertoghe, Kris Angèle Louisa

(57) **Abstract**

The present invention provides a device for restoring a DC component in a differential digital data stream. The device comprises a first and second peak detector for detecting peaks in the differential digital data stream, a memory element for storing an average of the first and second detected peak signals during rich data patterns, an error signal selector for error signal selection, and a regulator for negative feedback of a selected error signal. The selected error signal is either the average of the detected peak signals stored on the memory element minus the signal at the output of the first peak detector, or the signal at the output of the second peak detector minus the average of the detected peak signals stored on the memory element.

## Description

### Technical field of the invention

The present invention relates to the field of data communication. More particularly, the present invention relates to devices and corresponding methods for restoring the DC component in a digital data stream with an acceptable amount of jitter. The present invention also relates to the use of DC restoration in combination with small signal amplifiers for use in optical and electrical receivers.

### Background of the invention

There can be several reasons why a transmitted digital signal may have lost its DC-component, or why it is required to have a DC restoration loop. For example, in a digital transmission path, it often happens that the signal has been AC coupled, i.e. ripped of its DC component. Further, CMOS signal amplifier stages themselves can also show offset due to transistor pair mismatches. In this case it is also required to adjust the DC level, anticipating this offset source in the amplification chain.

Often to make this DC restoration process easy, the transmitted signal is treated by making it DC balanced prior to transmission. A well-known way of doing this is by using 8B/10B coding. DC balanced digital signals are signals that have, within a certain run length, the same number of ONEs and ZEROs. Assuming this DC-balance, one can easily restore the signal offset in this case by AC-coupling.

Many applications, however, are not DC balanced. A state of the art method to recover the DC component is to bring the signal into a differential form, and to follow the top of the signals on both differential nodes by using peak detectors. The voltage difference of the output of the peak-detectors then forms an error signal that is further used for regulating away the offset in the signal and for as such restoring the DC level with low jitter. This system is not performing well in restoring the DC component when the data stream is sparse, i.e. when the maximum runlength of one symbol type is limited to one, while the maximum runlength of the opposite symbol type is 2 or higher for an extended period of time.

### Summary of the invention

It is an object of the present invention to provide good apparatus and methods for performing DC restoration of digital signals.

The above objective is accomplished by a method and device according to the present invention.

In a first aspect, the present invention provides a device for restoring the DC component in a differential digital data stream. The device comprises
a first and second peak detector for detecting peaks in the differential digital data stream,
a memory element for storing an average of the first and second detected peak signals during rich data patterns,
an error signal selector for error signal selection,
a regulator for negative feedback of a selected error signal,
whereby the selected error signal is either the average of the detected peak signals stored on the memory element minus the signal at the output of the first peak detector, or the signal at the output of the second peak detector minus the average of the detected peak signals stored on the memory element.

It is an advantage of a device according to embodiments of the present invention that it provides a good restoration of the DC component. This leads to an acceptable amount of jitter for example when amplifying small amplitude signals into digital data streams. It is an advantage of a device according to embodiments of the present invention that it can handle very complicated, unbalanced sets of bit streams, including sparse data patterns.

In a device according to embodiments of the present invention, the error signal selector may comprise a set of switches. The error signal selector may furthermore be adapted for generating a set of complementary control signals for controlling the switches.

In particular embodiments of the present invention, four switches may be provided, a switch between each of output nodes of the peak detectors and differential input nodes of the regulator, and a switch between the memory element and each of the differential input nodes of the regulator.

The switches may be implemented by means of transistors.

In a device according to embodiments of the present invention, the regulator may be adapted for providing common mode and differential mode feedback.

In embodiments of the present invention, the error signal selector may comprise a comparator. The error signal selector may furthermore comprise an inverter for providing a complementary signal. The comparator may operate at a frequency below half the nyquist frequency of the data rate, preferably below 30% of the nyquist frequency, more preferred about 10% of the nyquist frequency. This way, the error signal selector is slow with respect to single bits, which is particularly useful in case of sparse data.

A device according to embodiments of the present invention may be coupled between differential input nodes of a first amplifying stage and differential output nodes of a last amplifying stage. The first amplifying stage and the last amplifying stage may be one and the same amplifying stage. Alternatively, they may be different amplifying stages in a sequence of amplifying stages, the output of the first amplifying stage being coupled, directly or indirectly, to the input of the last amplifying stage, i.e. with or without other elements, e.g. other amplifying stages, being coupled in between.

In a second aspect, the present invention provides a method for restoring a DC component in a differential digital data stream. The method comprises
detecting first and second peaks in the differential digital data stream,
storing an average of the detected first and second peaks in the differential digital data stream during rich data patterns, and
selecting an error signal by switching between the stored average of the detected peak signals minus the detected peak signal and the detected peak signal minus the stored average of the detected peak signals, and
providing negative feedback of the selected error signal to the differential digital data stream.

It is an advantage of a method according to embodiments of the present invention that a good DC restoration is provided, leading to an acceptable amount of jitter e.g. when amplifying small amplitude signals into digital data streams. It is an advantage of a method according to embodiments of the present invention that it can handle very complicated, unbalanced sets of bit streams, including sparse data patterns.

Storing an average of the detected first and second peaks in the differential digital data signal may include a switched capacitor effect.

A method according to embodiments of the present invention may furthermore comprise generating control signals for controlling switching between the stored average of the detected peak signals minus the detected peak signal and the detected peak signal minus the stored average of the detected peak signals.

In a further aspect, the present invention provides the use of DC restoration method according to embodiments of the present invention in combination with small signal amplifiers for use in optical and electrical receivers.

In yet another aspect, the present invention provides the use of a device according to embodiments of the present invention for restoring the DC component in a differential digital data stream.

The teachings of the present invention permit the design of improved offset detectors for improved restoration of the DC-component, leading to a reduced output jitter when amplifying small amplitude signals into digital data streams. Offset detectors according to the present invention can handle very complicated, unbalanced sets of bit streams, including sparse data patterns.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows a general block schematic for DC restoration having a DC restorer XDC and two amplifying stages X3 and X4.
Fig. 2 shows a DC restorer that is state of the art.
Fig. 3 shows an example of implementation of one of the amplifying stages X3, X4 present in Fig.1.
Fig. 4 illustrates an example of implementation of a regulator in a DC restorer.
Fig. 5 illustrates an example of an implementation of a peak detector circuit.
Fig. 6 shows a simulated voltage evolution when using the state of the art DC-restorer of Fig.2.
Fig. 7 and Fig.8 show the same voltage evolution as in Fig. 6, zoomed in at two particular moments in time.
Fig. 9 is a block schematic of a DC restorer according to an embodiment of the present invention including a control signal generator circuit Xconnect.
Fig. 10 shows an example of implementation of the control signal generator circuit Xconnect present in Fig.9.
Fig. 11 shows a simulated voltage evolution when using the DC restorer of Fig. 9.
Fig. 12 and Fig. 13 show the same voltage evolution as in Fig. 11, zoomed in at two particular moments in time.
Fig. 14 shows the EYE diagrams of the simulations when using the state of the art DC-restorer and when using the DC restorer of the present invention, respectively.

In the different figures, the same reference signs refer to the same or analogous elements.

In the drawings, most of the NMOS and PMOS transistors have an upper and a lower length indication. The upper one is always intended to be the width, and the lower one is always intended to be the length of the transistor. The given values are only indicative, and have been used in the simulation for demonstrating the merits of the invention. Also resistors and capacitors have been used in the simulations with values as indicated in the drawings, for the purpose of illustration only.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter. Thus, the scope of the expression "a device comprising means A and B" should not be limited to devices consisting only of components A and B. It means that with respect to the present invention, the only relevant components of the device are A and B.

Similarly, it is to be noticed that the term "coupled" should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

The invention will be described by a detailed description of several embodiments of the invention. It is obvious that other embodiments of the invention can be configured by a person skilled in the art without departing from the technical teaching of the present invention as defined by the claims, the invention therefore being limited only by the terms of the appended claims. It will be clear for a person skilled in the art that the present invention is also applicable to similar circuits that can be configured in any transistor technology, including for example, but not limited thereto, CMOS, BICMOS and SiGe BICMOS. It will furthermore be clear that similar merits of the invention can be obtained when single-ended signals are implemented as differential signals and vice-versa, without departing from the true spirit of the invention.

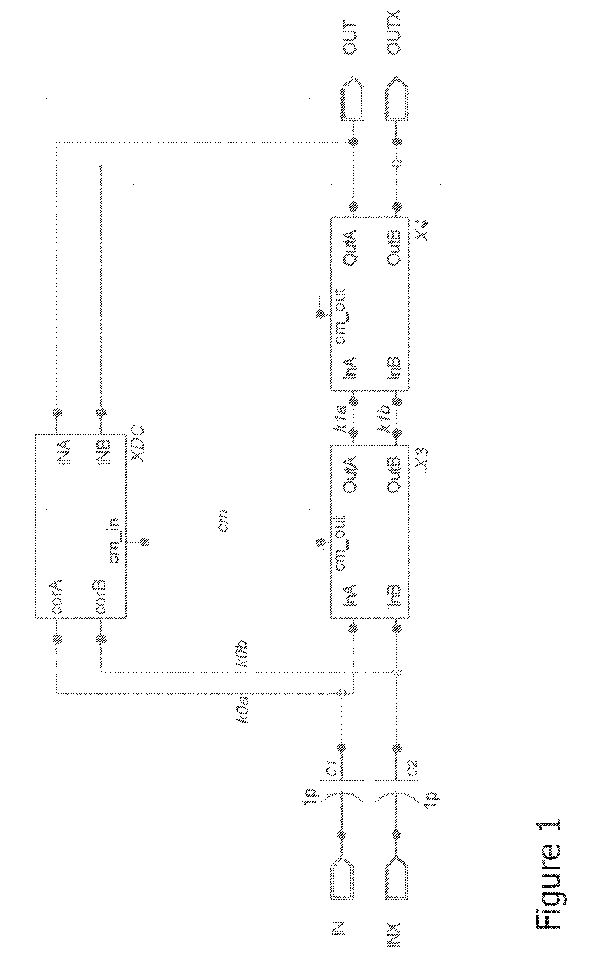

Figure 1 illustrates a general block schematic of a part of a data communications system provided with DC restoration. This basic block schematic is prior art; however, the drawing is not labelled prior art, as such system wherein the DC restorer is a DC restorer according to embodiments of the present invention is not prior art.

Figure 1 assumes that the signal requiring DC-restoration has already been converted into a differential signal and is being applied to an input comprising differential input nodes *(IN, INX).* Many recent applications use differential signalling or at least process their communications data signals using the differential format. Differential signalling is a method of transmitting information electrically by means of two complementary signals sent on two separate wires. Conversion from single ended data-signals into differential signals is known to a person skilled in the art.

In this example of DC restoration, capacitors *C1* and *C2* are provided at the input, for having AC coupling. After this, zero, one or more amplifying stages are provided that each may provide gain; however, the amplifying stages are not intended to provide so much gain that the signals on the output nodes *(OUT, OUTX)* get clipped or saturated. As an example only, two amplifying stages, a first amplifying stage *X3* and a second amplifying stage *X4*, are shown in Figure 1. Leaving the output signals at such analogue level is required to retrieve information about the DC level.

Retrieving information about the DC level is done by a DC restorer *XDC*, effectively using the signals at the output nodes *(OUT, OUTX)* at its input for correcting the DC level by applying a differential current into the input nodes *(k0a, k0b)* to the first amplifying stage X3. When the DC restorer *XDC* determines that the DC level is too high, it will lower the DC level by injecting a differential current that brings the DC level downwards. When the DC restorer *XDC* finds that the DC level is too low, it will increase the DC level by injecting a differential current that brings the DC level upwards.

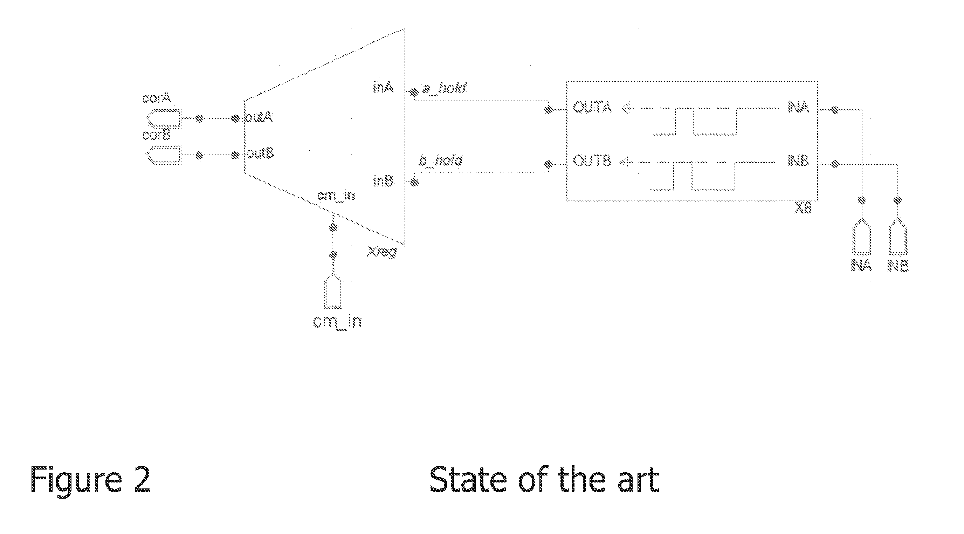

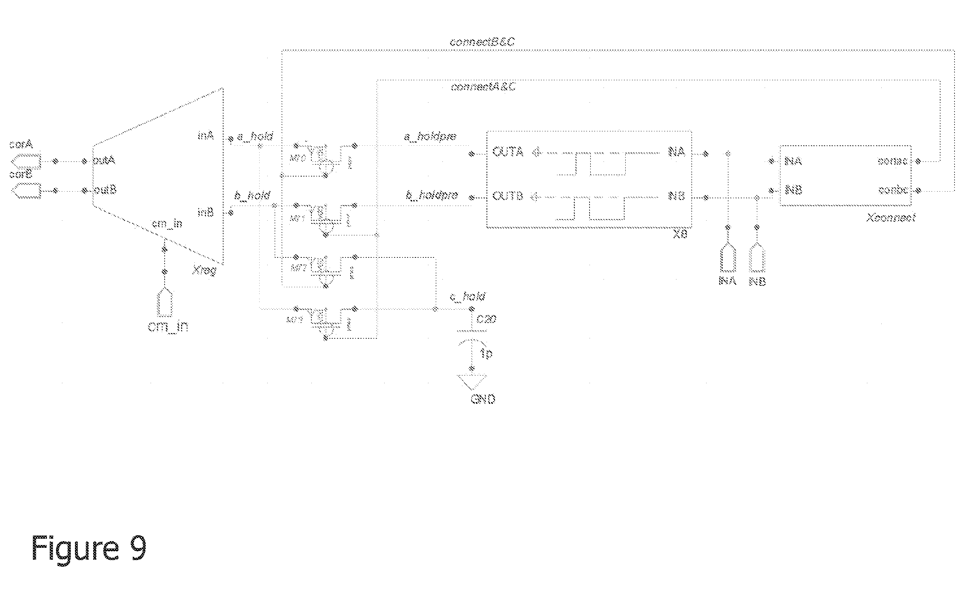

Further, the voltage on node *cm* is indicative for the common mode voltage on the input nodes *(k0a, k0b)* to the first amplifying stage, allowing a regulator *Xreg,* being part of the DC restorer, as illustrated in Fig. 2 and Fig. 9, to adjust the common mode on the input nodes *(k0a, k0b)* to the first amplifying stage *X3* to a level that is preferably located in the middle of the common mode input voltage range of the first amplifying stage *X3.* To this end, the regulator *Xreg* will inject, via the output nodes *corA, corB* of the DC restorer *XDC,* common mode currents into the input nodes *(k0a, k0b)* to the first amplifying stage *X3*, thus bringing the common mode voltage on the input nodes *(k0a, k0b)* to the first amplifying stage *X3* upwards when the common mode is too low, and bringing it downwards when the common mode is too high. Common mode levelling should always be taken care of in differential systems that became AC coupled by means of capacitors. In embodiments of the present invention, the common mode output level of the first amplifying stage X3 is by construction falling into the common mode input range of the second amplifying stage X4. Therefore, the common mode output CM_out of the second amplifying stage X4 may be left floating.

This way of adding the common- and differential mode error currents to the input through capacitors *C1* and *C2* can also be achieved in another way, i.e. by omitting the capacitors *C1* and *C2* and by adding the error signal to the input signals using conventional analogue adder principles. For this purpose, e.g. the first amplifying stage can be modified to have two differential inputs that allow addition (not shown).

Figure 2 shows a state of the art implementation of a DC restorer allowing DC restoration of data-streams that are not DC-balanced. Two peak detectors inside peak detector circuit *X8* follow the tops of the separate output nodes *OUT* and *OUTX,* thus generating voltages on input nodes *a_hold* and *b_hold* to a regulator *Xreg.* Ideally, when there is no DC offset in the differential signal on the output nodes *OUT, OUTX,* then the peak voltages *a_hold* and *b_hold* are the same. In that case the regulator *Xreg* will not modify the voltages on the input nodes *koa ,k0b* to the first amplifying stage *X3* and the correct DC level will remain in place. When, for example, the voltage on *a_hold* is higher than the voltage on *b_hold,* the regulator *Xreg* will bring down the voltage on the corresponding input node *k0a* to the first amplifying stage *X3* and pull up the voltage on the corresponding input node *k0b* to the first amplifying stage *X3,* and vice versa. When one considers the full differential DC restoring loop, negative feedback is to be achieved. In the present example the required negation is performed in the regulator *Xreg.*

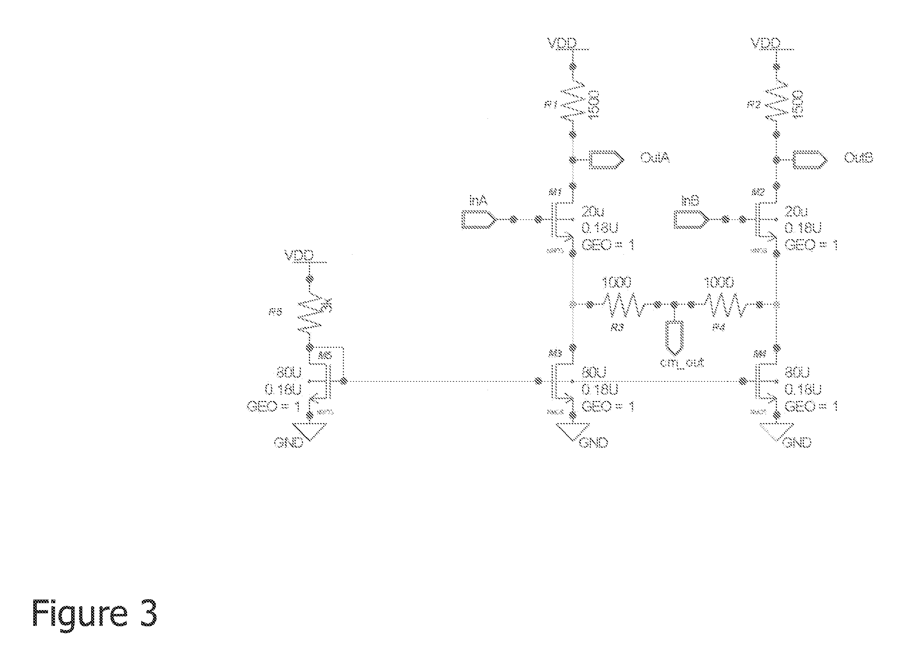

Figure 3 shows an example of an amplifying stage, in this case using CMOS transistors *M1* and *M2* forming a differential pair with resistive degeneration by resistors *R3* and *R4.* The differential input nodes *InA, InB* of the first amplifying stage *X3* are coupled to the gates of the transistors *M1*, *M2,* respectively. The differential output nodes *OutA, OutB* are provided at the drains of the transistors *M1*, *M2,* respectively. A load, e.g. provided by resistors *R1* and *R2,* respectively, is coupled to the drains of transistors *M1*, *M2.* Current sources are provided and coupled to the sources of the transistors *M1*, *M2,* respectively, to flow current through each of these transistors *M1*, *M2.* The current sources may be implemented by means of transistors *M3* and *M4,* mirroring the current through resistor *R5* and transistor *M5.* As an indication for the common mode at the differential input of the amplifying stage, the signal *cm_out,* is brought out at the connection point between the degeneration resistors *R3* and *R4.* Differential signals applied to input nodes *InA* and *InB* of the first amplifying stage *X3* will not influence the voltage on this node very much. The voltage on this node *cm_out* is rather a stepped down voltage of the common mode input voltage at the input nodes *(InA, InB).* The output common mode of this stage is biased by design to fall into the common mode input range of a subsequent similar amplifying stage, *X4* in the example illustrated.

The gain is further determined by the ratio of *R1* and R3 and should be such that the output of the amplifying stage chain should never get clipped in the application where the DC-restorer *XDC* is to be applied. Such clipping will hide the DC offset at the differential output nodes *(OUT, OUTX)* such that any DC restorer would get confused.

An amplifying stage can further also be optimised to provide gain at higher frequencies (not shown here), such as to compensate for frequency dependent losses in the transmission channel. For cables and transmission lines, it is possible to replace resistors R3 and R4 by complex impedances for achieving a rising gain towards the Nyquist frequency of the data (a data rate of 2 Gbps has a nyquist frequency of 1 GHz). In that way the total transfer function of the transmission channel (or medium) and the amplification through the set of amplifying stages get equalized.

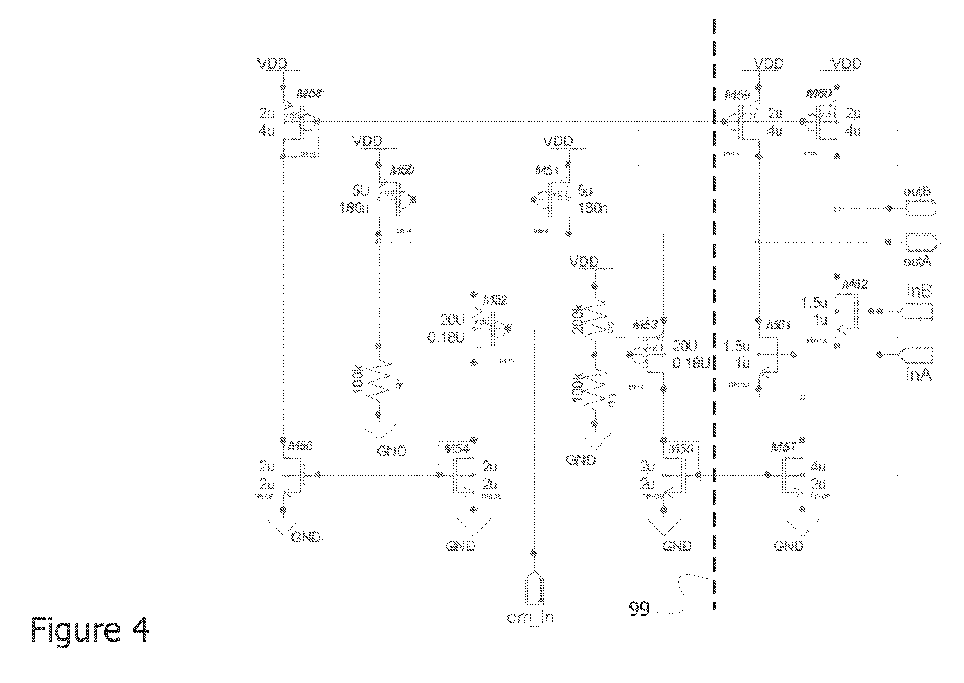

Figure 4 shows an implementation embodiment of a regulator *Xreg* that is adapted for providing common mode and differential mode feedback.

All circuit components, left of dashed line 99 in Figure 4, are mainly required for achieving the common mode regulation. This is known by a person skilled in the art. In this case it is a typical symmetric trans-conductance amplifier, whereby at the right of dashed line 99, the usual single PMOS output transistor is split into two transistors *M59* and *M60.* The NMOS output transistor *M57* remains, and a differential NMOS pair *(M61, M62)* has been added in order to provide the differential feedback for DC restoring action. Assuming the common mode of input nodes *k0a, k0b* to the first amplifying stage *X3* is correct, the sum of the drain currents of PMOS transistors M59 and *M60* equals the drain current of NMOS transistor M57 in magnitude, leaving the common mode voltage on input nodes *k0a, k0b* to the first amplifying stage *X3* unaltered. A difference voltage on differential input nodes *k0a, k0B* to the first amplifying stage *X3* will generate a difference in drain current of *M61* and M62, generating DC restoration.

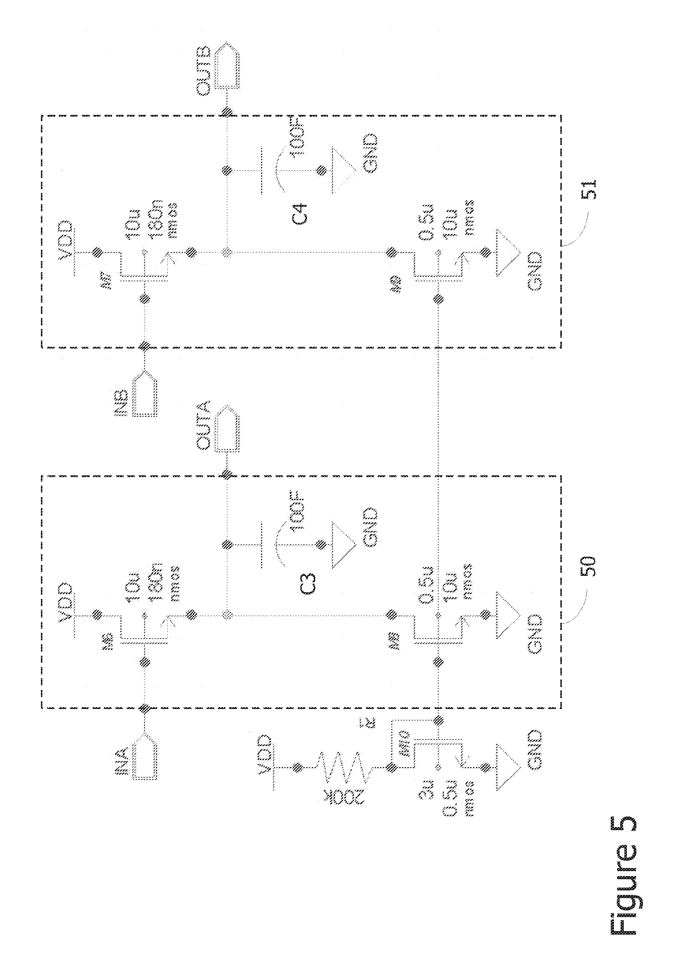

Figure 5 shows a typical example of a set of two peak detectors 50, 51 in a peak detector circuit *X8* that are in fact made by two voltage followers *M6, M7,* having current sinks, *M8* and *M9* and having memory elements e.g. in the form of capacitors C3 and C4 respectively. The current sink *M8, M9* of each of the peak detectors 50, 51 is relatively small such that with the memory element, e.g. capacitor *C3, C4,* it remembers more or less the latest applied voltage peak presented at its input. This type of peak detector will lose its peak information slowly when no fresh peak is presented at its input. In the present implementation, top-peak detectors are shown, that will follow the tops in the signal applied at the input nodes *InA, InB,* and when no new tops are presented, the output voltage will slowly decrease, at a rate determined by the magnitude of the current source *M8, M9* and the used capacitor value *C3, C4.* In this simple form of peak detector it should also not be forgotten that the peaks being followed are at a voltage level stepped down by a little more than an NMOS threshold voltage as is known by the person skilled in the art.

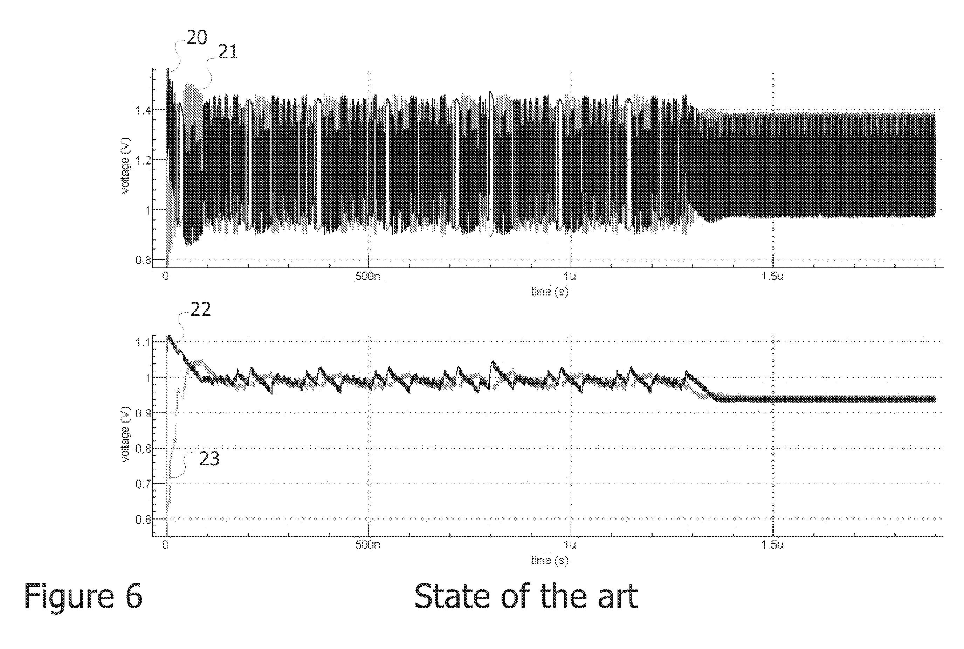

Figure 6, 7 and 8 show the result of a simulation of a state of the art DC restoration circuit as in Figure 1 with a DC restorer as illustrated in Figure 2, at a data rate of 2.25 Gbps.

The power supply voltage is for example 1.8V, and the circuits are for example made in a 180 nm CMOS technology. A digital rail-to-rail signal is thus HIGH when being close to the power supply voltage, e.g. 1.8V, and LOW when being close to 0V. In the high-speed path of the example illustrated a signal is considered to be a ONE to be when OUT is close to 1.4V and OUTX is close to 950 mV. A ZERO is the opposite, with OUT close to 950 mV and OUTX close to 1.4 V. Figure 6 illustrates the voltage of the data signal between time 0 and 2 µs.

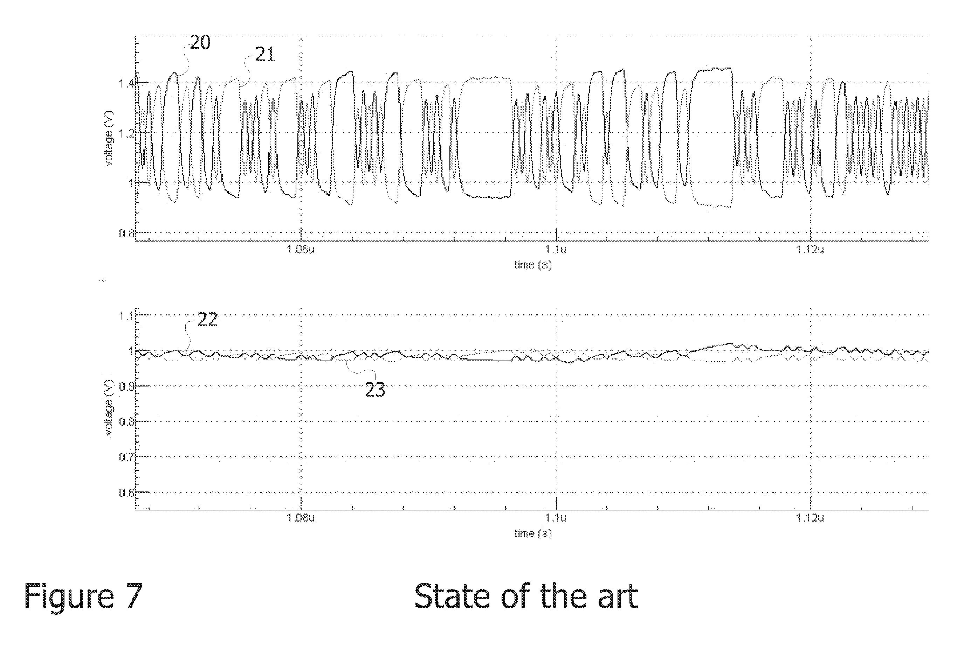

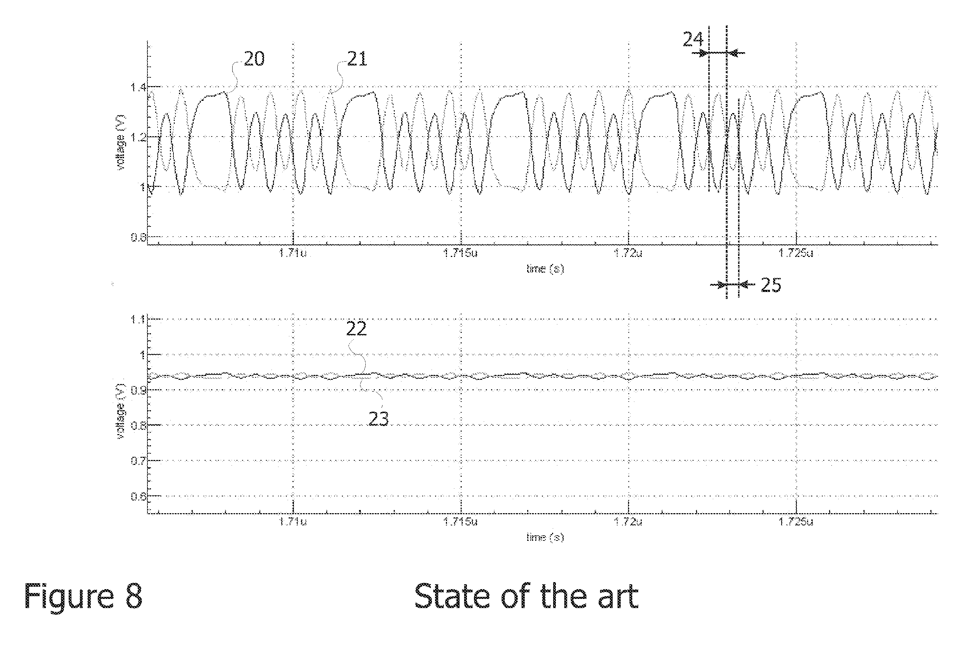

Figure 7 shows the zoomed in curves around 1.1 µs, from 1.068 µs to 1,128 µs. Figure 8 shows the zoomed in curves around 1.72 µs, from 1.706 µs to 1.729 µs. Curves 20 and 21 show the voltages on output nodes *OUT* and *OUTX,* respectively, of the DC restoration circuit. Curves 22 and 23 show the curves at the output of the peak detectors in the peak detector circuit *XB*. The output of the peak detectors are the voltages on input nodes *a_hold* and *b_hold,* respectively, of the regulator *Xreg.*

The signals applied at the differential input of the DC restoration circuit, with input nodes *IN, INX* are realistic curves of digital signals, having some attenuation at *0101* transitions, slightly deforming the bit shape. As can be seen in the top part of Figure 6 and Figure 7, before 1280 ns, the digital data that is applied to the input nodes *IN, INX* has every now and then at least multiple same identical bits, like 2, 3 or more ONEs and 2, 3 or more ZEROs on a row. Most of the applied data streams in practice are like that, including 8B/10B coded data and even DC-unbalanced data. Scrambled data, and data that contains long periods of control characters, may contain however sparse data strings that have only single ONEs for a long period, or only single ZEROs for a long period. After 1280 ns, the effect of such sparse data string is shown on the state-of the art system by inputting a repetition of the bit sequence (1110101010) for the remainder of the simulation. In this string, three consecutive ONEs, single ONEs and further only single ZEROs are present.

Due to initial conditions the simulation starts with the wrong DC level that gets corrected within the first 200-ns by the DC restoration system as can be seen on curves 20 to 23 on Fig. 6. At 1100 ns (Fig.7), being still before 1280 ns where the sparse data set is received, correct operation of the DC restorer of Fig. 2 is obtained. The differential error signal, being the difference between curves 23 and 22 becomes small, and the DC level in the data signal at the output shown by curves 20 and 21 is also correct. The tops of the signals when having multiple sets of ONEs or ZEROs reach about the same voltage level of 1.45V. With single ONEs, the OUT voltage doesn't fully reach this 1.45V, and similarly, with single ZEROs, the OUTX doesn't reach this level either. With the non-sparse pattern this does not show up as a problem,

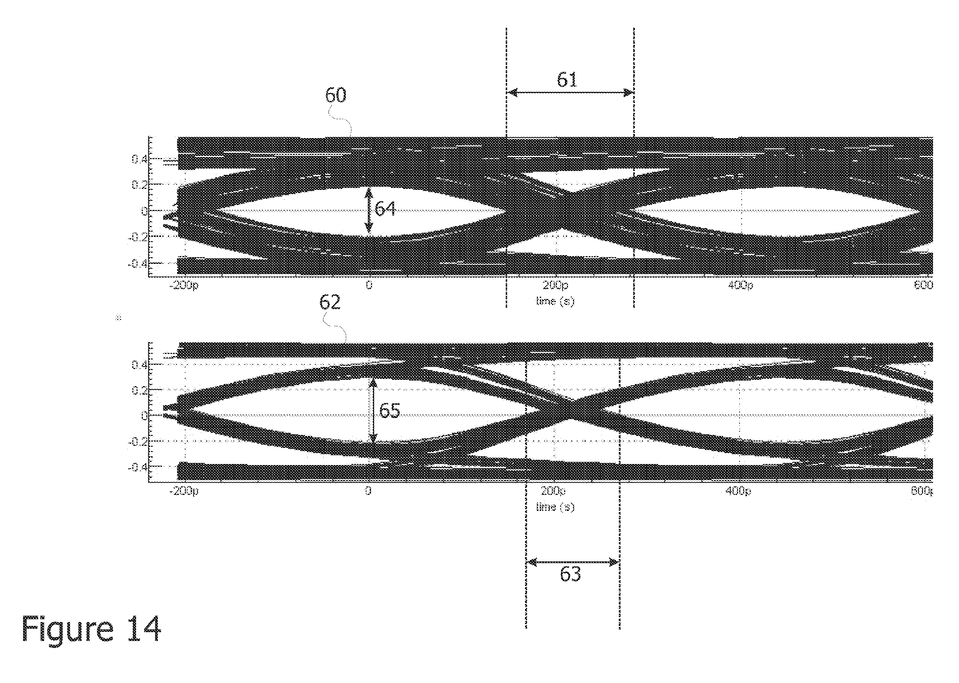

However, when applying the difficult sparse pattern, the system fails to operate at a low jitter level. Figure 8 shows the details. What happens is that the tops of curves 20 and 21 get aligned, however, due to the lack of multiple ZEROs in a row, the system fails. As a result, a single bit ONE 25 becomes much shorter in period than a single bit ZERO 24. This can also be seen in the EYE diagram 60 (Fig. 14, top part). This EYE diagram is taken from the differential output curves 20 and 21, from 1000-ns onwards, covering as well the non-sparse as the sparse period. It shows reduced EYE opening 64 and increased deterministic jitter 61.

An embodiment of a DC restorer according to the present invention is illustrated in Figure 9. The DC restorer comprises a peakdetector circuit *X8* comprising a first and a second peak detector, and a regulator *Xreg.* The peakdetectors in the peak detector circuit *X8* and the *regulator Xreg* can be the same or analogous circuits as illustrated in Fig. 5 and Fig. 4, respectively. Further, an extra memory element, e.g. capacitor C20, is provided between the peak detector circuit *X8* and the regulator *Xreg.* The extra memory element holds a voltage on node *c_hold.* An error signal selector is provided. In the example illustrated, the error signal selector comprises switches and a control signal generator circuit. In the embodiment illustrated, four switches are used, e.g. PMOS transistors *M70, M71, M72 and M73.* Two of theses switches, PMOS transistors *M70* and *M71,* are provided between the output of the peak detector circuit *X8* and the input of the regulator *Xreg.* The other two switches, PMOS transistors *M72* and *M73,* are provided between the extra memory element and the input of the regulator *Xreg.* For the simulations, the width and length of these transistors were all 1 µm (not shown). A control signal generator circuit *Xconnect* is also added for generating connection signals *connectB&C* and *connectA&C.* These connection signals are applied for controlling the switches. In the embodiment illustrated, the connection signal *connectA&C* controls the switch *M71* between the output *OUTB* of the peak detector circuit *X8* and the input *inB* of the regulator *Xreg,* as well as the switch *M73* between the extra memory element *C20* and the input *inA* of the regulator *Xreg.* The connection signal *connectB&C* controls the switch *M70* between the output *OUTA* of the peak detector circuit *X8* and the input *inA* of the regulator *Xreg,* as well as the switch *M72* between the extra memory element *C20* and the input *inB* of the regulator *Xreg.*

The system works best when the latter two signals *connectB&C* and *connectA&C* are designed to be each other's complement. When the one signal is HIGH, the other is LOW, and vice versa. When connection signal *connectA&C* is HIGH and *connectB&C* is LOW, switches *M70* and *M72* get conductive, and switches *M71* and *M73* will be high impedance, i.e. non conductive. In other words, the a output of the peakdetector circuit *X8*, being node *a_holdpre,* will get connected to the input node *a_hold* of the regulator *Xreg,* and the node *c_hold* of the extra memory element will be connected to the input node *b_hold* of the regulator *Xreg.* Alternatively, when *connectA&C* is LOW and *connectB&C* is HIGH, switches *M71* and M73 get conductive, and switches M70 and *M72* will be high impedance, i.e. non-conductive. In other words, the b output of the peakdetector circuit *X8*, being node *b_holdpre,* will get connected to the input node *b_hold* of the regulator *Xreg,* and the node *c_hold* of the extra memory element will be connected to the input node *a_hold* of the regulator *Xreg.*

Assuming that the connection signals are alternating (HIGH - LOW), one can see that by charge sharing, a switched capacitor effect occurs, bringing the voltage on the node *c_hold,* close to, or exactly to, the average of the output signals on the nodes *a_holdpre* and *b_holdpre* of the peak detector circuit *X8*. The connection signals are preferably made such that enough transitions are present to keep the level on *c_hold* updated. Further, when a sparse data pattern occurs having only single ONEs embedded in longer periods of ZEROs, it is desired that the *b_holdpre* drives the regulator *Xreg,* and thus is connected to the input node *b_hold* of the regulator *Xreg.* Therefore, the connect signal *connectA&C* should be LOW. The DC-level will then keep being updated by the *OUTX* level that is highest in voltage during most of the time, and that is not showing any reduced amplitude, since it is present during multiple ZEROs in a row. The uncertain *OUT signal* is thus not used during these sequences. For the second side of the comparison, the signal *c_hold* is connected to *a_hold,* making the comparison referred to the level that was earlier deduced during periods showing richer (non-sparse) data patterns.

Complementary, when a pattern occurs having only single ZEROs embedded in longer periods of ONEs, then it is desired that the *a_holdpre* drives the regulator *Xreg,* and thus is connected to the input node *a_hold* of the regulator *Xreg.* Therefore, the connect signal *connectB&C* should be LOW. The DC-level will then keep being updated by the *OUT* level that is highest in voltage during most of the time, and that is not showing any reduced amplitude, since it is present during multiple ONEs in a row. The uncertain *OUTX* signal is thus not used during these sequences. For the second side of the comparison, the signal *c_hold* is connected to *b_hold,* making the comparison referred to the level that was earlier deduced during periods showing richer (non sparse) data patterns.

The control signal generator circuit *Xconnect* should thus generate during non-sparse data pattern periods regularly switching connection signals *connectA&C* and *connectB&C.* During sparse data pattern periods, the peak detector following the non-sparse side of the data should be used for connection to the regulator in the DC restore circuit. The other side of the input of the regulator has then to be connected to the *c_hold* node.

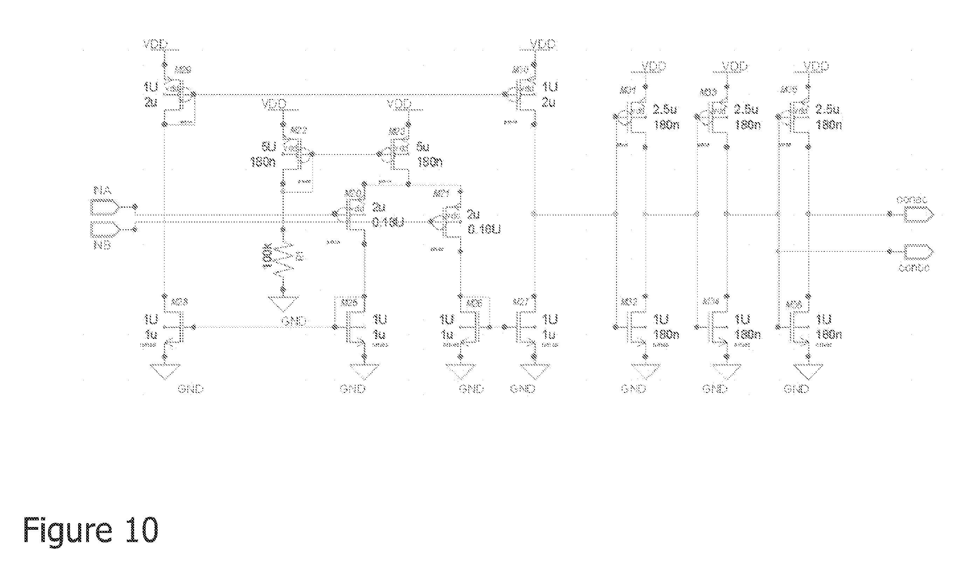

Figure 10 shows an example of a control signal generator circuit *Xconnect.* In its most general form, the control signal generator circuit is a circuit provides a control signal for toggling between the two states (high or low) during rich data patterns, and that takes the "better" side during sparse data patterns. In its presented form this is achieved by a comparator, with differential input and differential output and high gain. To achieve the high gain, the comparator has also two inverters (M31...M34), for generation of *connectB&C,* and a last inverter (M35, M36) for making the complementary signal *connectA&C.* The offset of the comparator is not critical. Important is that the comparator's speed is chosen such that it does not follow the full bit rate, in other words, it is slow with respect to single bits. Only if the balance between ONEs and ZEROs is being changed for a longer period, e.g. 3 to 10 bits, it will switch to the other side. With non-sparse data, the outputs of both peak detectors of the peak detector circuit *X8* will be connected alternatingly, as required for updating *c_hold* to the average of *a_holdpre* and *b_holdpre.* During sparse data, only the peak detector's output following the non-sparse side of the data will be connected and the *c_hold* will be used as reference. *c_hold* is then not longer updated, staying at the same voltage level.

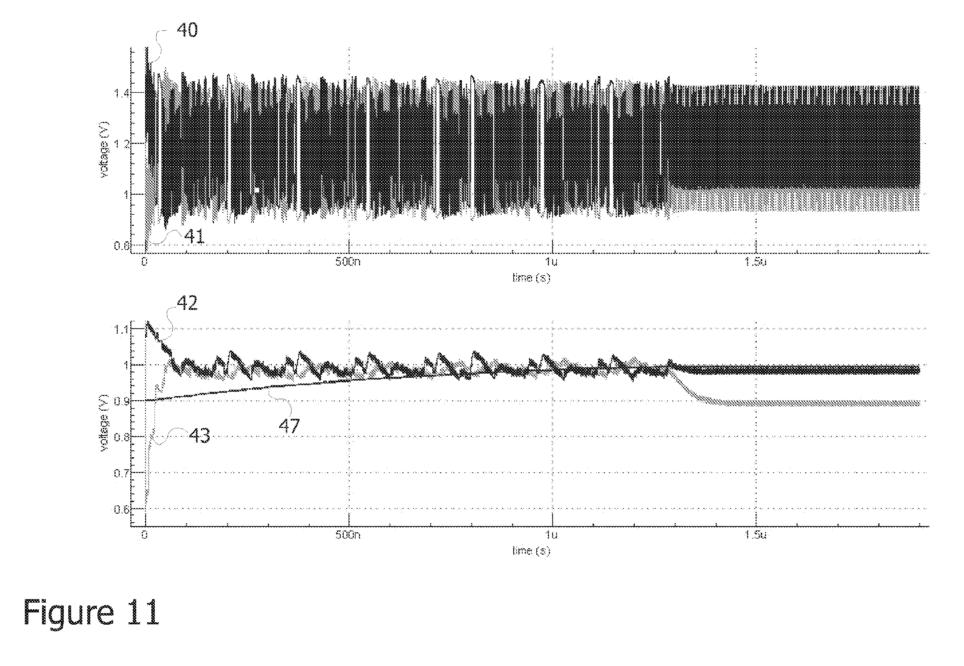

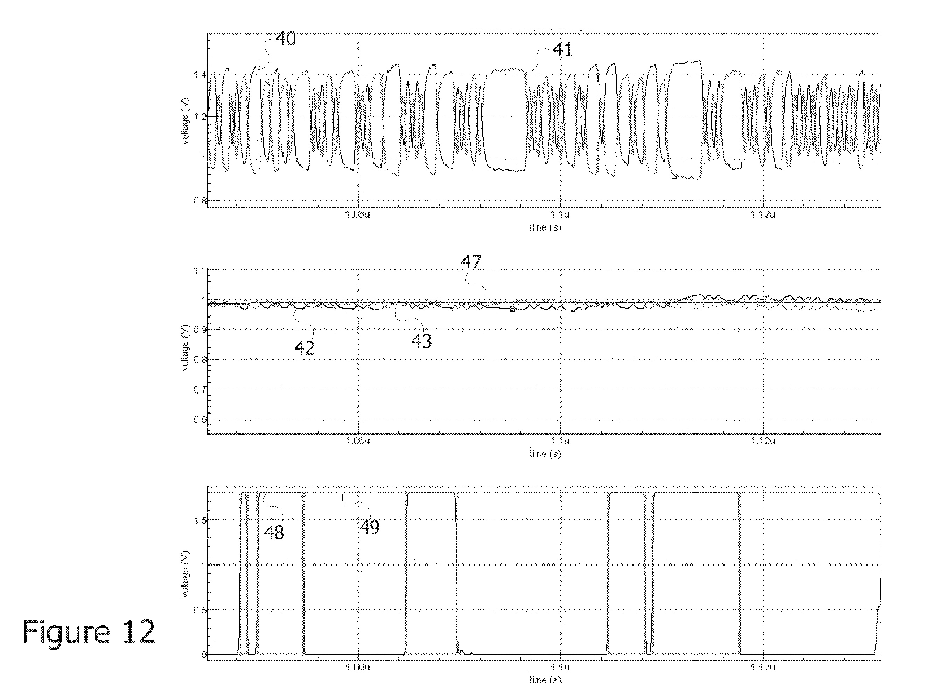

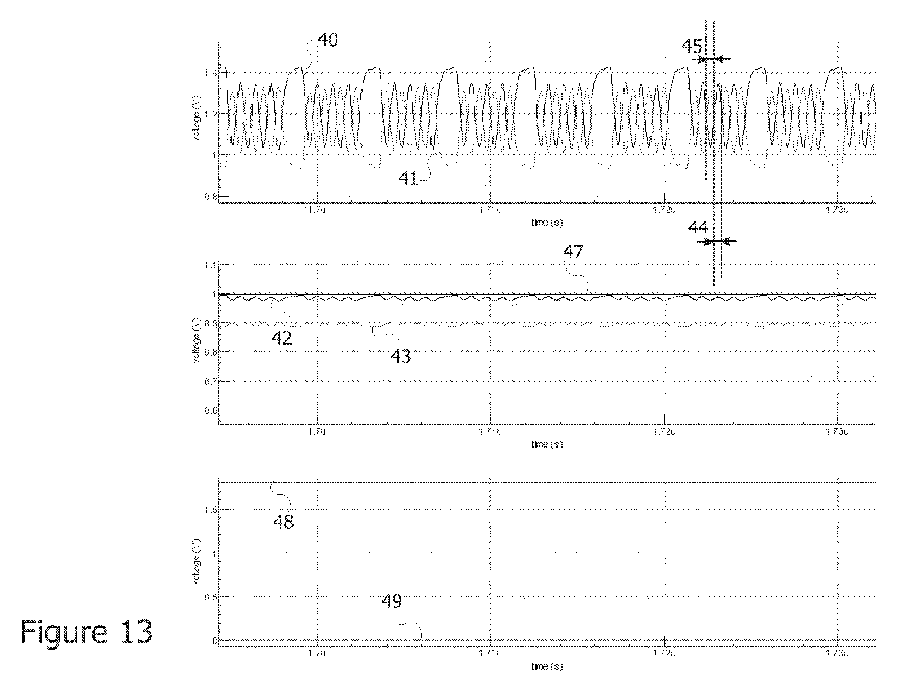

Figures 11, 12 and 13 show the result of a simulation of the DC restorer according to an embodiment of the present invention as illustrated in Figure 9, at a data rate of 2.25 Gbps. Figure 12 shows the zoomed in curves around 1.1 µs, from about 1.068 µs to 1.128 µs. Figure 13 shows the zoomed in curves around 1.72 µs, from about 1,696 µs to about 1,73 µs. Curves 40 and 41 show the voltages on nodes *OUT* and *OUTX* respectively. Curves 42 and 43 show the curves at the output of the peak detectors of the peak detector circuit *X8*, being the voltages on node *a_holdpre* and *b_holdpre,* respectively.

The signals applied at the differential input *(IN,INX)* of the DC restorer circuit are the same as the ones earlier applied in the simulation of Figs. 6, 7 and 8. Before 1280n, non-sparse data is applied, and after 1280n the same sparse data pattern is applied.

Due to initial conditions the simulation starts with the wrong DC level that gets corrected within the first 200-ns by the DC restoration system as can be seen on curves 40 to 43 on the top of Fig. 11. The initial condition for *c_hold* was chosen at 900 mV. Curve 47 shows the voltage on node *c_hold.* Due to the time constants used, it takes the node *c_hold* about 1000 ns to reach the average level between *a_holdpre* and *b_holdpre.* The DC restore operation is already working, even though *c_hold* is not started at its correct voltage level. This is demonstrated by the fact that during the first 200 ns, the DC offset is already regulated away. However, the capability of restoring the DC level for sparse data patterns becomes only available from 1000 ns onwards, i.e. when *c_hold* has arrived at its targeted level, between *a_holdpre* and *b_holdpre.*

Around 1100 ns, a zoomed-in diagram is shown in Figure 12. On this figure also the curves 48 and 49 are shown, being the *connectA&C* and the *connectB&C* voltages respectively. As aforementioned, they are each other's digital complement, and they are oscillating. The tops of the signals 40 and 41 during this non-sparse data pattern reach about the same voltage level of 1.45 V as was the case in the simulation of the state of the art DC restorer.

This time however, when applying the difficult sparse data pattern, the DC restorer remains operating correctly. Figure 13 shows the details. What happens is that the tops of curves 40 and 41 do not get aligned, however, only the top of signal 40 gets aligned to the 1.45 V level. This is due to the fact that the *c_hold* voltage (curve 47) is used as the reference for *a_holdpre* (curve 42). The wrong level *b_holdpre* (curve 43) becomes useless and its is not used since the connection signals (curves 48, 49) remain steady, with *connectA&C* 48 being HIGH and *connectB&C* 49 being LOW.

As a result, the length 44 of a single bit ONE becomes as long as the length 45 of a single bit ZERO in Fig. 13. As a result, the EYE diagram 62, taken from the differential output curves 40 and 41, from 1000ns onwards, and shown in Fig. 14 at the bottom, shows a large EYE opening 65 and acceptable low deterministic jitter 63. The EYE 62 is wider open when using a DC restorer according to embodiments of the present invention than the eye 60 when using a state-of-the-art DC restorer.

More simulations have been conducted showing also that other sparse data patterns are covered using the DC restorer of the present invention. Even long repetitions of 00000000000010000000000001 have been checked and are covered by the system.

Although the DC restorer of embodiments of the present invention is working fine, some possible issues can be taken care of.

A first element is that the voltage on *c_hold* being held at a constant level during the sparse pattern may start drifting when the sparse signal remains present for many milliseconds or seconds. If a sparse data pattern can occur for such long periods in the given application, extra measures may be taken to lower the leakage on node *c_hold.* For this, it can be considered to put the four PMOS switches M70...M73 in a common N-well that gets biased by a unity gain amplifier to the voltage of *c_hold* itself. Since the leaking junctions in the PMOS switches M70...M73 will then see zero volts, the leakage will be decreased by several orders of magnitude. This will extend the period that sparse data can be accepted to several hours or even days, since the leakage current is close to zero.

Secondly, there can be a possible start-up issue. When the voltage on the *c_hold* node is first brought to a level much higher than the average of *a_holdpre* and *b_holdpre,* and then released, the system can stall. This leads to a permanent ONE or a permanent ZERO at the output. To avoid this possible starting condition, the capacitor *C20* connected to node *c_hold* can be referred with its other side to GND, as suggested by Fig. 9. When applying the power supply means, the dangerous start-up condition is avoided. If there are other conditions provoking this stalling condition a person skilled in the art will need to detect this and then take appropriate action to bring the voltage on *c_hold* to the average of *a_holdpre* and *b_holdpre* or to below this average. This detection can be time based (e.g. by detecting a long time period without signal transistions) or signal based, e.g. voltage based (by detecting that *c_hold* is too high). This can be devised by the person skilled in the art.

It is to be understood that although preferred embodiments, specific constructions and configurations, as well as materials, have been discussed herein for devices according to the present invention, various changes or modifications in form and detail may be made without departing from the scope of this invention as defined by the appended claims.

## Claims

1. Device for restoring a DC component in a differential digital data stream, the device comprising
a first and second peak detector for detecting peaks in the differential digital data stream,
a memory element (C20) for storing an average of the first and second detected peak signals during rich data patterns,
an error signal selector (Xconnect, M70, M71, M72, M73) for error signal selection,
a regulator (Xreg), for negative feedback of a selected error signal,
whereby the selected error signal is either the average of the detected peak signals stored on the memory element minus the signal at the output of the first peak detector, or the signal at the output of the second peak detector minus the average of the detected peak signals stored on the memory element.

2. Device according to claim 1, wherein the error signal selector comprises a set of switches (M70, M71, M72, M73).

3. Device according to claim 2, wherein the error signal selector is adapted for generating a set of complementary control signals for controlling the switches.

4. Device according to any of claims 2 or 3, wherein four switches are provided, a switch between output nodes of the peak detectors and differential input nodes of the regulator, and a switch between the memory element and each of the differential input nodes of the regulator.

5. Device according to any of claims 2 to 4, wherein the switches are implemented by means of transistors.

6. Device according to any of the previous claims, wherein the regulator is adapted for providing common mode and differential mode feedback.

7. Device according to any of the previous claims, wherein the error signal selector comprises a comparator.

8. Device according to claim 7, wherein the error signal selector furthermore comprises an inverter for providing a complementary signal.

9. Device according to any of claims 7 or 8, wherein the comparator operates at a frequency below half the nyquist frequency of the data rate.

10. Device according to any of the previous claims, wherein the device is coupled between the differential input nodes of a first amplifying stage and the differential output nodes of a last amplifying stage.

11. Method for restoring a DC component in a differential digital data stream, the method comprising
detecting first and second peaks in the differential digital data stream,
storing an average of the detected first and second peaks in the differential digital data stream during rich data patterns, and
selecting an error signal by switching between the stored average of the detected peak signals minus the detected peak signal and the detected peak signal minus the stored average of the detected peak signals, and
providing negative feedback of the selected error signal to the differential digital data stream.

12. Method according to claim 11, wherein storing an average of the detected first and second peaks in the differential digital data signal includes a switched capacitor effect.

13. Method according to any of claims 11 or 12, furthermore comprising generating control signals for controlling switching between the stored average of the detected peak signals minus the detected peak signal and the detected peak signal minus the stored average of the detected peak signals.

14. Use of DC restoration method according to any of claims 11 to 13 in combination with small signal amplifiers for use in optical and electrical receivers.

15. Use of a device according to any of claims 1 to 10 for restoring the DC component in a differential digital data stream.
